(19) Europäisches Patentamt
European Patent Office
Office européen des brevets

(11) **EP 2 315 174 A1**

(12) **EUROPEAN PATENT APPLICATION**

(43) Date of publication:
**27.04.2011 Bulletin 2011/17**

(51) Int Cl.:
**G06Q 30/00** (2006.01)

(21) Application number: **10172692.5**

(22) Date of filing: **12.08.2010**

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**
Designated Extension States:
**BA ME RS**

(30) Priority: **27.08.2009 US 583905**

(71) Applicants:
• **Sony Corporation**
**Tokyo 108-0075 (JP)**
• **Sony Electronics Inc.**
**Park Ridge, NJ 07656 (US)**

(72) Inventors:
• **Loughery III, Donald L.**
**Long Beach, CA 90803 (US)**

• **Frazier, Milton**
**San Marcos, CA 92069 (US)**
• **Rainier, Rajiv**
**San Diego, CA 92127 (US)**
• **Jacobs, Stephen**
**Ardsley, NY 10022 (US)**
• **Noronha, Austin**
**Sunnyvale, CA 94086 (US)**
• **Smith, Tim**
**Carlsbad, CA 92011 (US)**

(74) Representative: **Jackson, Jonathan Andrew**
**D Young & Co LLP**
**120 Holborn**
**London EC1N 2DY (GB)**

(54) **System and method for supporting a consumer aggregation procedure in an electronic network**

(57)     A system and method for implementing an information distribution network includes an information service that is configured to provide information distribution services through the information distribution network. User devices are utilized by device users to communicate with the information service for receiving the information distribution services. Transport structures are implemented to collect appropriate metadata from various entities in the information distribution network. A group aggregator analyzes grouping factors from the collected metadata to define at least one consumer group from among the devices users. Various advertisers then communicate with a bid manager to participate in a bidding procedure for obtaining advertising rights to provide selected information to the consumer group.

FIG. 1A

110

EP 2 315 174 A1

User
Device A

122(a)

User
Device B

122(b)

• • • •

User
Device M

122(m)

Consumer Group

150

FIG. 1B

## EP 2 315 174 A1

**Description**

This invention relates generally to techniques for distributing electronic information, and relates more particularly but not exclusively to a system and method for supporting a consumer aggregation procedure in an electronic network.

Implementing effective methods for distributing electronic information is a significant consideration for designers and manufacturers of contemporary electronic systems. However, effectively distributing electronic information utilized by electronic devices may create substantial challenges for system designers. For example, enhanced demands for increased system functionality and performance may require more system processing power and require additional software resources. An increase in processing or software requirements may also result in a corresponding detrimental economic impact due to increased production costs and operational inefficiencies.

Furthermore, enhanced system capability to perform various advanced distribution operations may provide additional benefits to a system user, but may also place increased demands on the control and management of various system components. For example, an electronic system that effectively manages electronic advertising information may benefit from an effective implementation because of the large amount and complexity of the digital data involved.

Due to growing demands on system resources and substantially increasing data magnitudes, it is apparent that developing new techniques for distributing electronic information to electronic devices is a matter of concern for related electronic technologies. Therefore, for all the foregoing reasons, developing effective techniques for distributing electronic information remains a significant consideration for designers, manufacturers, and users of contemporary electronic systems.

In accordance with embodiments of the present invention, a system and method for supporting a consumer aggregation procedure in an electronic network are disclosed. In one embodiment, a distribution system automatically provides various types of appropriate information for utilization by device users of corresponding user devices. For example, the distributed information may include, but is not limited to, commercial advertising information that is targeted towards specific device users. Unlike traditional advertising techniques that support a "pull" model that requires consumers to actively access desired advertising information, the foregoing distribution system supports a "push" model that automatically selects and transmits appropriate advertising information to targeted device users based upon corresponding metadata files that define both the device users and the various advertisers.

In one embodiment, the distribution system may support and utilize one or more transport structures that automatically transport various types of relevant information to and from appropriate entities in the distribution system. For example, the transport structures may be utilized to gather and transfer metadata regarding the various device users, the user devices, the electronic network, and respective advertisers from an information service. In addition, the transport structures may also be utilized to provide links to targeted advertisements and/or electronic content to appropriate user devices.

In certain embodiments, the information service may advantageously provide a bid server that supports a consumer aggregation procedure during which certain device users and their corresponding user devices are aggregated into one or more consumer groups. Advertisers or other appropriate entities may then bid or otherwise make offers to acquire advertising access rights to the consumer groups to more accurately and effectively target relevant advertising and other information.

In certain embodiments, a group aggregator may analyze information from a metadata database or other data source(s) to identify one or more consumer groups. In certain embodiments, the group aggregator may continually analyze various types of metadata to recognize group patterns for device users and their corresponding user devices. The group aggregator may keep a running tally of various predefined grouping factors to create corresponding consumer groups. In certain embodiments, consumer groups may be populated by calculating weighted sums of the grouping factors for the various device users. The grouping factors may include, but are not limited to, user metadata, device metadata, user preferences, user behavior patterns, geographic location information, Internet browsing patterns, and user purchasing behavior.

The group aggregator may also identify appropriate target advertisers or advertisements by using any effective techniques. For example, the group aggregator may analyze various predefined targeting factors to identify target advertisers. The targeting factors may include, but are not limited to, advertising goals, product characteristics, product pricing information, and advertisement characteristics. The group aggregator may then compare the characteristics of the consumer groups to the target advertisers/advertisements, and offer the appropriate target advertisers an opportunity to make bids for sending advertisements to the respective consumer groups.

In certain embodiments, a bid manager may coordinate a bidding procedure during which advertisers or other appropriate entities may bid or otherwise make offers to acquire access to one or more consumer groups. The bid manager may analyze bid information in light of specific predefined bidding rules to determine one or more bidding winners. The bidding winners may then be notified and allowed to provide advertising information for transmission to the consumer group(s) through the information service. The various device users may then individually decide whether to participate in the bulk purchase opportunity that is being offered to the consumer group(s).

The present invention may thus advantageously create targeted pools of consumers that have asked to see product ads regarding goods or services for which the consumers are seeking information and/or purchase opportunities. The present invention aggregates these consumers, and provides ad placement and interactive dialogue connections to the advertisers through the use of appropriate metadata. The advertisers then bid on the right to deliver their ad-sets to the consumer groups based on the collection, analysis, and aggregation of the collected metadata. For at least the foregoing reasons, the present invention therefore provides an improved system and method for supporting a consumer aggregation procedure in an electronic network.

Various respective aspects and features of the invention are defined in the appended claims. Combinations of features from the dependent claims may be combined with features of the independent claims as appropriate and not merely as explicitly set out in the claims.

Embodiments of the invention will now be described with reference to the accompanying drawings, throughout which like parts are referred to by like references, and in which:

FIG. 1A is a block diagram of a distribution system, in accordance with one embodiment of the present invention;

FIG. 1B is a block diagram of a consumer group, in accordance with one embodiment of the present invention;

FIG. 2A is a block diagram for one embodiment of a transport structure, in accordance with the present invention;

FIG. 2B is a block diagram for one embodiment of a media file, in accordance with the present invention;

FIG. 3 is a block diagram for one embodiment of a user device from FIG. 1A, in accordance with the present invention;

FIG. 4 is a block diagram for one embodiment of the user memory from FIG. 3, in accordance with the present invention;

FIG. 5 is a block diagram for one embodiment of the information service from FIG. 1A, in accordance with the present invention;

FIG. 6A is a block diagram for one embodiment of the transport server from FIG. 5, in accordance with the present invention;

FIG. 6B is a block diagram for one embodiment of the transport server memory from FIG. 6A, in accordance with the present invention;

FIG. 7 is a block diagram for one embodiment of the ad server from FIG. 5, in accordance with the present invention;

FIG. 8A is a block diagram for one embodiment of the bid server from FIG. 5, in accordance with the present invention; and

FIG. 8B is a block diagram for one embodiment of the bid server memory from FIG. 8A, in accordance with the present invention.

The present invention relates to an improvement in electronic data distribution techniques. The following description is presented to enable one of ordinary skill in the art to make and use the invention, and is provided in the context of a patent application and its requirements. Various modifications to the disclosed embodiments will be apparent to those skilled in the art, and the generic principles herein may be applied to other embodiments. Therefore, the present invention is not intended to be limited to the embodiments shown, but is to be accorded the widest scope consistent with the principles and features described herein.

The present invention comprises a system and method for implementing an information distribution network, and includes an information service that is configured to provide information distribution services through the information distribution network. User devices are utilized by device users to communicate with the information service for receiving the information distribution services. One or more transport structures are implemented to collect appropriate metadata from various entities in the information distribution network. A group aggregator analyzes predefined grouping factors from the collected metadata to create at least one consumer group from among the devices users. Various advertisers may then communicate with a bid manager to participate in a bidding procedure for obtaining advertising rights to provide selected information to the consumer group.

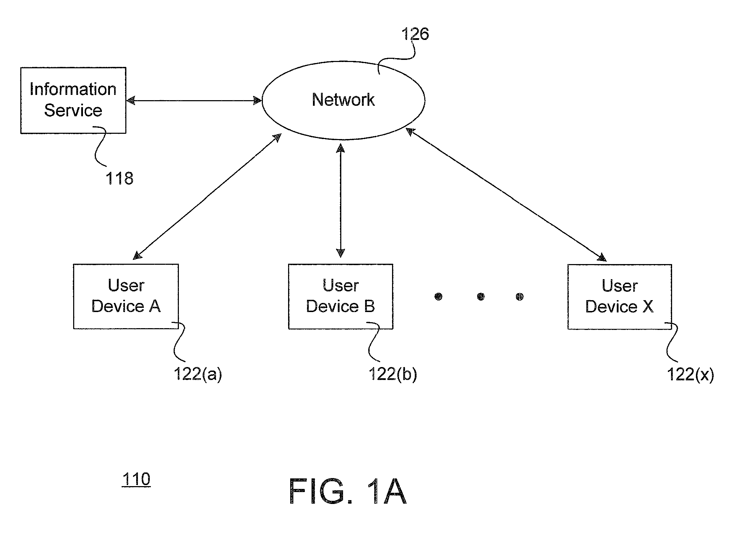

Referring now to FIG. 1A, a block diagram of a distribution system 110 is shown, in accordance with one embodiment of the present invention. In the FIG. 1A embodiment, distribution system 110 may include, but is not limited to, one or more user devices 122, an information service 118, and a network 126. In alternate embodiments, distribution system 110 may be implemented by utilizing components and configurations in addition to, or instead of, certain of those components and configurations discussed in conjunction with the FIG. 1A embodiment.

In accordance with the present invention, distribution system 110 advantageously supports a distribution procedure that automatically provides various types of appropriate information for utilization by device users of corresponding user devices 122. For example, the distributed information may include, but is not limited to, commercial advertising information that is specifically targeted towards appropriate device users of user devices 122. Unlike traditional advertising techniques that support a "pull" model that requires consumers to actively access desired advertising information, the FIG. 1A distribution system 110 supports a "push" model that automatically selects and transmits appropriate advertising information to targeted device users based upon corresponding metadata that defines the device users and the various advertisers.

In the FIG. 1A embodiment, distribution system 110 may be implemented and supported by a distribution control entity that offers distribution services to the advertisers and device users in return for financial or other compensation. The distribution control entity may be a commercial enterprise that maintains and controls key elements of distribution system 110 such as the information service 118.

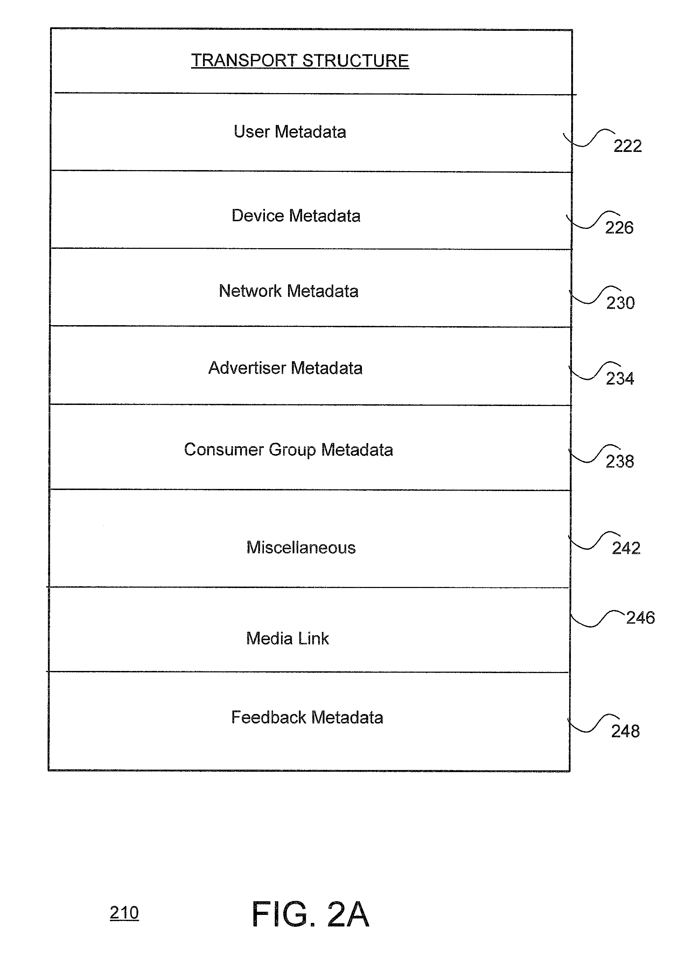

In accordance with the present invention, distribution system 110 may advantageously support and utilize one or more transport structures (see FIG. 2A) that automatically transport various types of relevant information to and from appropriate entities in distribution system 110. For example, the transport structures may be utilized to gather and transfer metadata regarding the various device users, the user devices 122, the network 126, and respective advertisers from information service 118. In addition, the transport structures may also be utilized to transport or provide links to targeted advertisements and/or electronic content for appropriate user devices 122.

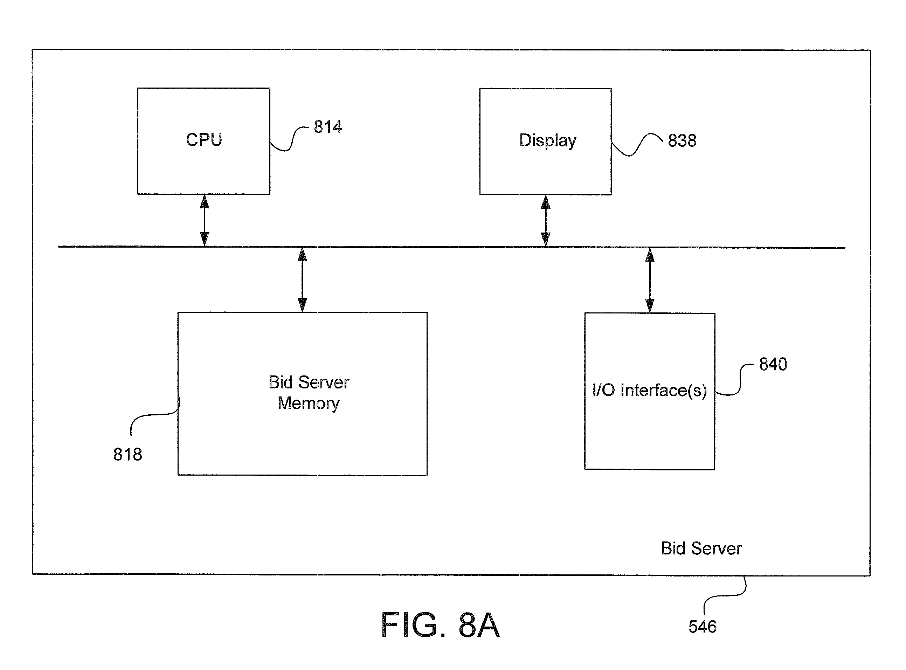

In accordance with the present invention, information service 118 may advantageously provide a bid server (see FIGS. 8A-8B) that supports a consumer aggregation procedure during which certain device users and their corresponding user devices 122 are aggregated into targeted consumer groups. Advertisers or other appropriate entities may then bid or otherwise make offers to acquire advertising rights for the consumer groups to more accurately and effectively target relevant advertising and other information. The present invention thus proves an improved system and method for supporting a consumer aggregation procedure in an electronic network. Further details regarding the implementation and utilization of transport structures in the FIG. 1A distribution system 110 are discussed below in conjunction with FIGS. 2A-8B.

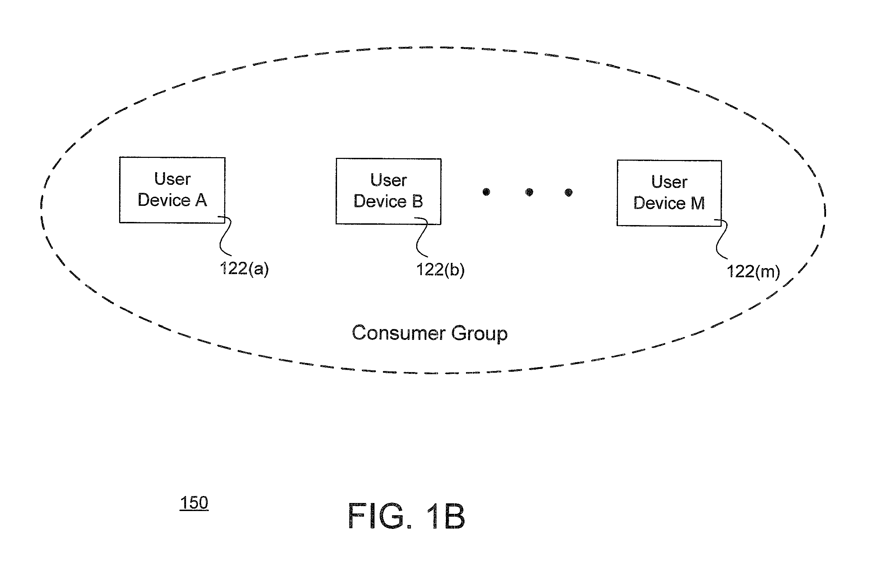

Referring now to FIG. 1B, a block diagram of a consumer group 150 is shown, in accordance with one embodiment of the present invention. In the FIG. 1B embodiment, consumer group 150 may include, but is not limited to, individual device users represented by respective user devices 122(a) through 122(m). In FIG. 1B, the user devices 122 may be the same or similar to correspondingly-numbered user devices 122(a) through 122(m) from FIG. 1A. In the FIG. 1B embodiments the various user devices 122 may each perform bi-directional communications with any or all of the other user devices 122 in consumer group 150 by using any effective communication techniques.

The FIG. 1B consumer group 150 is presented for purposes of illustration, and in alternate embodiments, consumer group 150 may be implemented by utilizing components and configurations in addition to, or instead of, certain of those components and configurations discussed in conjunction with the FIG. 1B embodiment. For example, any desired number or type of user devices 122 may be utilized by corresponding device users to form consumer group 150. In the FIG. 1B embodiment, consumer group 150 may be defined or created by utilizing any effective techniques.

The present invention may thus create targeted pools of consumers that have asked to see product ads regarding goods or services for which the consumers are seeking information and/or purchase opportunities. The present invention aggregates these consumers, and provides ad placement and interactive dialogue connections to the advertisers through the use of appropriate metadata. The advertisers bid on delivering their ad-sets to the consumer groups based on the collection, analysis, and aggregation of the collected metadata. This could include paying the aggregator greater access fees or provide the consumer with better economic or value terms, or a combination of both.

One example is mortgage lenders. The aggregator pools metadata concerning real estate agents, buyers, and sellers to help expedite the sale for mortgage lenders who will bid for ad space that the aggregator holds for buyers looking for mortgages. The information provided by the aggregator might include, but is not limited to, consumer profiles and behavior trends that grade the level of interest in securing a mortgage, geographic information, credit information, and desired real estate values. The packaged real estate advertisement is sent to the consumer in a portfolio that is offered by the mortgage lender based upon the aggregated consumer metadata and the potential agents and/or sellers.

In accordance with the present invention, the device users thus have a type of consumer union opportunity to create buying blocks to leverage bulk purchases. This can occur by information service 118 (FIG. 1) or other appropriate entity noticing advertiser services or goods delivery patterns that could be creating a buying block opportunity for the user/purchasers, or conversely, the advertiser can offer a bulk purchase opportunity to the information service 118 to try and form a buyers group by searching the metadata for interested subscribers. The information service 118 in both cases is a centralized aggregator to form these types of leveraged user purchases or advertiser offered bulk sales opportunities.

In summary, the present invention supports the ability of information service 118 to form buyer purchasing blocks (consumer groups 150), either through the monitoring of user requests or in forming the pooled group of buyers at the request of an advertiser. Further details regarding the implementation and utilization of consumer groups 150 in the FIG. 1A distribution system 110 are discussed below in conjunction with FIGS. 2A-8B.

Referring now to FIG. 2A, a block diagram for one embodiment of a transport structure 210 is shown, in accordance with the present invention. The FIG. 2A embodiment is presented for purposes of illustration, and in alternate embodiments, transport structures 210 may be implemented by utilizing components and configurations in addition to, or instead of, certain of those components and configurations discussed in conjunction with the FIG. 2A embodiment.

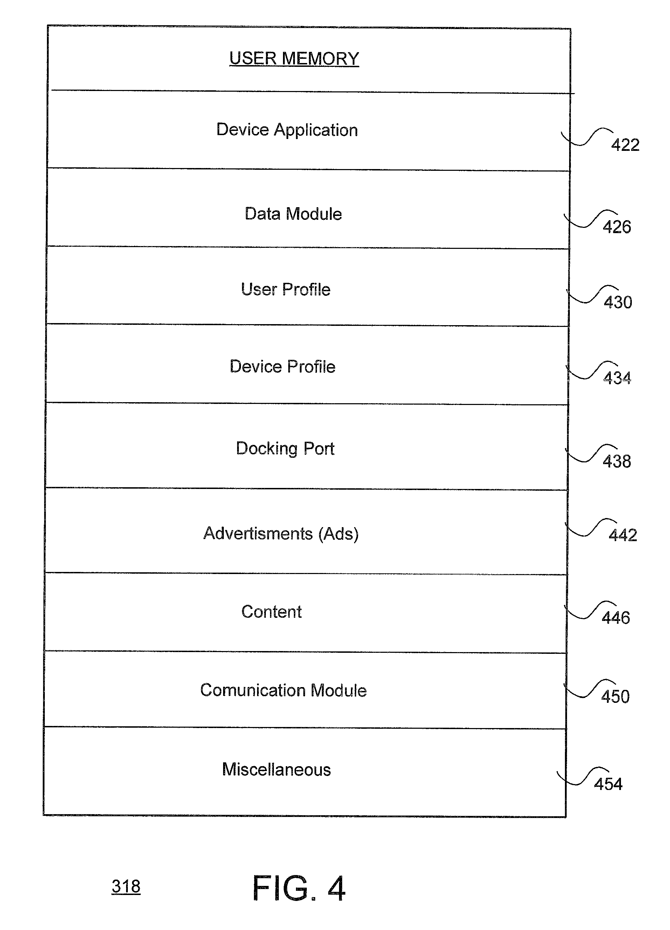

In the FIG. 2A embodiment, user metadata 222 may include information regarding one or more device users of user devices 122 (FIG. 1A). In certain embodiments, user metadata 222 may be selectively compiled from one or more appropriate user profiles 430 (see FIG. 4). Similarly, device metadata 226 may include information regarding one or more user devices 122. In certain embodiments, device metadata 226 may be selectively compiled from one or more appropriate device profiles 434 (see FIG. 4). In the FIG. 2A embodiment, network metadata 230 may include information regarding various attributes or entities of electronic network 126 (FIG. 1A).

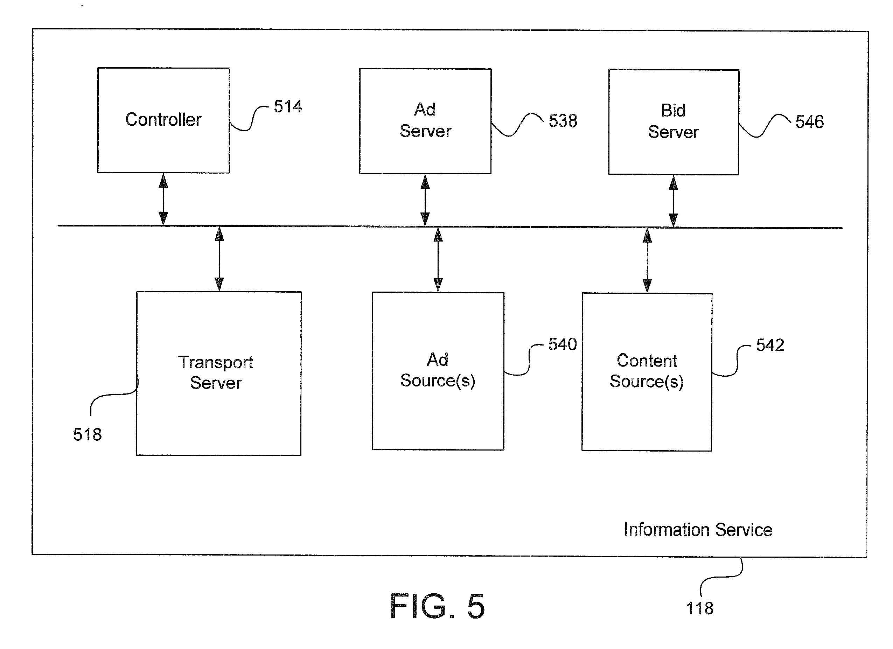

In the FIG. 2A embodiment, advertiser metadata 234 may include information regarding one or more advertisements or advertisers that are associated with distribution system 110. In certain embodiments, the advertisers may be associated with ad sources 540 (FIG. 5). Similarly, content renderer metadata 238 may include information regarding one or more content renderers that are associated with distribution system 110. In certain embodiments, the content renderers may be associated with content sources 542 (FIG. 5).

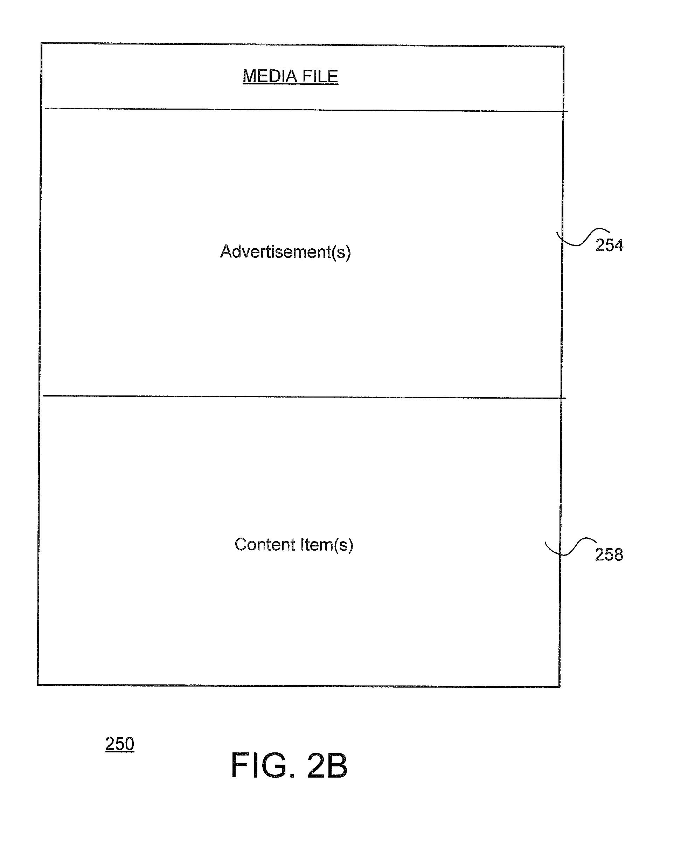

In the FIG. 2A embodiment, consumer group metadata 238 may include any appropriate types of information regarding the identification, population, or utilization of one or more consumer groups 150 (FIG. 1B) in distribution system 110. In the FIG. 2A embodiment, miscellaneous information 242 may include any additional data or other appropriate information. Media link 246 may include appropriate information to indicate a location or a connection means for accessing one or more media files, as discussed below in conjunction with FIG. 2B.

Feedback metadata 248 in the transport structures 210 may be updated to reflect any relevant information from the user devices 122 of the targeted device users for transmission back to information service 118 or other appropriate entities. In the FIG. 2A embodiment, information stored in transport structures 210 may include any appropriate type of software instructions for providing intelligent functionality and control for transport structure 210. In certain embodiments, these software instructions may interact with, or be executed by, an external entity such as a processor of a user device 122 or other appropriate electronic device.

Various entities in distribution system 110 may utilize the information in transport structure 210 in any appropriate manner. For example, a consumer aggregation procedure may be performed by matching compatible elements of user metadata 222, device metadata 226, and advertiser metadata 234 to thereby identify one or more consumer groups 150 for providing appropriate types of relevant advertising information for automatic transmission to targeted device users in the consumer groups 150.

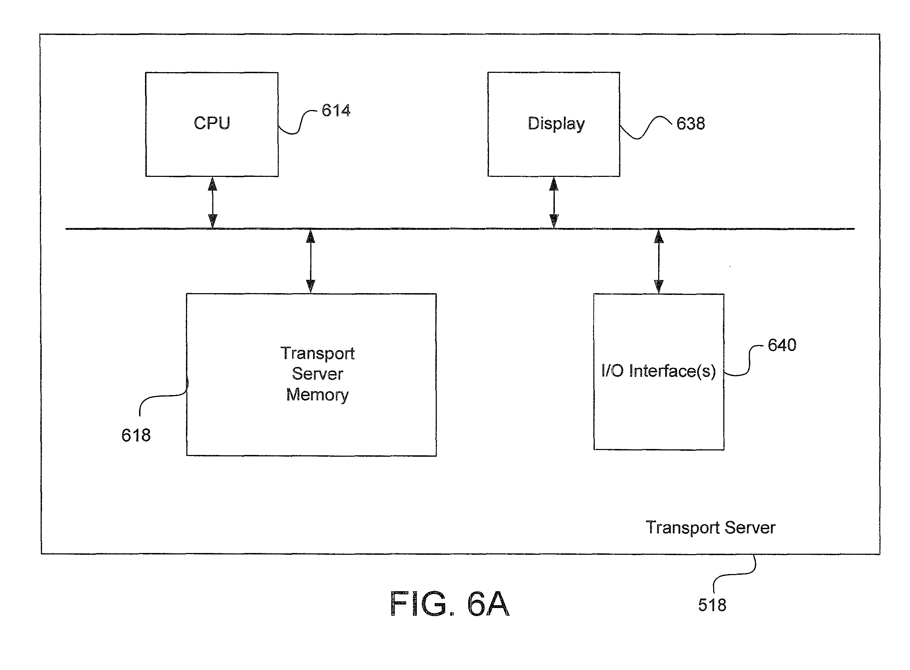

Transport structures 210 may be originated in any effective manner from any appropriate source. For example, transport structures 210 may be embedded in user devices 122 (FIG. 1A), and activated by device users if desired. Alternately, various entities in network 126 or information service 118 may create or activate transport structures 210. For example, a transport server (see FIG. 6A) may manage the origination and operation of transport structures 210. Further details regarding the implementation and utilization of the FIG. 2A transport structure 210 are discussed below in conjunction with FIGS. 2B-8B.

Referring now to FIG. 2B, a block diagram for one embodiment of a media file 250 is shown, in accordance with the present invention. The FIG. 2B embodiment is presented for purposes of illustration, and in alternate embodiments, media file 250 may be implemented by utilizing components and configurations in addition to, or instead of, certain of those components and configurations discussed in conjunction with the FIG. 2B embodiment. For example, the FIG. 2B media file 250 is shown as a separate entity that is accessible by utilizing the media link 246 of FIG. 2A. However, in alternate embodiments, media file 250 may be implemented as an integral part of transport structure 210 of FIG. 2A.

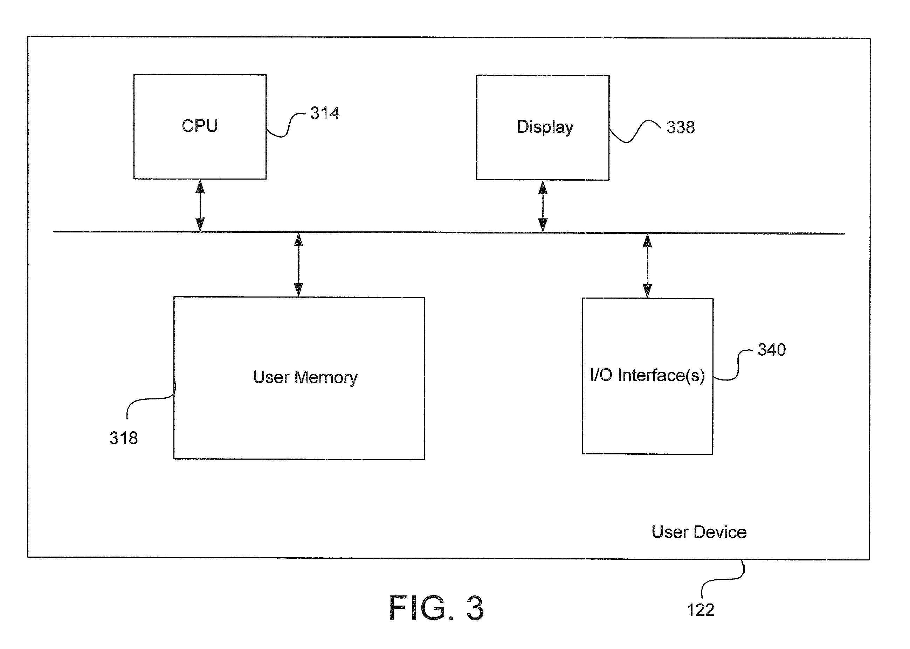

In the FIG. 2B embodiment, advertisements (ads) 254 may include any appropriate type of targeted advertising information that has been selected for transmission to appropriate ones of the user devices 122 in a consumer group 150 (FIG. 1B). Similarly, content items 258 may include any appropriate type of electronic content information that has been selected for transmission to appropriate ones of the user devices 122 in a consumer group 150. For example, content 258 may include, but is not limited to, video data, audio data, graphics, text, movies, music recordings, and computer programs. Further information for providing appropriate media files 250 to targeted consumer groups 150 is further discussed below in conjunction with FIGS. 3-8B.

Referring now to FIG. 3, a block diagram for one embodiment of a FIG. 1A user device 122 is shown, in accordance with the present invention. In the FIG. 3 embodiment, user device 122 includes, but is not limited to, a central processing unit (CPU) 314, a memory 318, a display 338, and one or more input/output interface(s) (I/O interface(s)) 340. The FIG. 3 embodiment is presented for purposes of illustration, and in alternate embodiments, a user device 122 may be implemented using components and configurations in addition to, or instead of, certain of those components and configurations discussed in conjunction with the FIG. 3 embodiment. In addition, user device 122 may be implemented as any type of portable or non-portable electronic device, including, but not limited to, a desktop computer, a personal digital assistant, a cellular telephone, a settop box, or a laptop computer.

In the FIG. 3 embodiment, CPU 314 may be implemented to include any appropriate and compatible microprocessor device that preferably executes software instructions to thereby control and manage the operation of user device 122. In particular, CPU 314 may execute software instructions that are stored in device memory 318 of FIG. 4 to collect, exchange, and utilize various types of relevant metadata between user device 122, third party devices, and various appropriate entities from information service 118 (FIG. 1A). In addition, CPU 314 may communicate with one or more transport structures 210.

In one example, a device user may be utilizing a user device 122 (such as a cellular telephone) at a commercial sales location, such as a grocery store or a gasoline station. The cellular telephone may automatically collect and exchange various types of relevant information and metadata with one or more other third party devices (such as a merchant's smart electronic cash-register device) by utilizing any effective techniques, including by exchanging transport structures 210 back and forth using appropriate handshaking techniques.

The cellular telephone may then transmit the metadata to an information service 118 (FIG. 1A) by utilizing any effective transmission techniques. For example, the metadata may be transmitted to the information service 118 either directly, or attached to a transport structure 210. In certain embodiments, the cellular telephone may transfer the metadata/transport structure 210 to a network portal device (such as a computer) that then transmits the metadata/transport structure 210 to the information service 118. In accordance with the present invention, the information service 118 may analyze the received metadata to more accurately provide targeted advertisements to appropriate device users.

The FIG. 3 display 338 may include any effective type of display technology including a cathode-ray-tube monitor or a liquid-crystal display device with an appropriate screen for displaying various information to a device user. In the FIG. 3 embodiment, I/O interface(s) 340 may include one or more input and/or output interfaces to receive and/or transmit any required types of information by user device 122. In the FIG. 3 embodiment, memory 318 may be implemented to include any combination of desired storage devices, including, but not limited to, read-only memory (ROM), random-access memory (RAM), and various types of non-volatile memory, such as floppy disks, memory sticks, compact disks, or hard disks. Additional details for the utilization of user device 122 are further discussed below in conjunction with FIGS. 4-8B.

Referring now to FIG. 4, a block diagram for one embodiment of the FIG. 3 user memory 318 is shown, in accordance with the present invention. In alternate embodiments, user memories 318 may be implemented by utilizing components and configurations in addition to, or instead of, certain of those components and configurations discussed in conjunction with the FIG. 4 embodiment.

In the FIG. 4 embodiment, device application 422 may include program instructions that are preferably executed by CPU 314 to perform various functions and operations for user device 122. The particular nature and functionality of device application 422 typically varies depending upon factors such as the specific type and particular functionality of the corresponding user device 122. In the FIG. 4 embodiment, user device 122 utilizes data module 426 to manage a user profile 430 and a device profile 434 that collectively describe any desired attributes or characteristics related to user device 122 or a device user of user device 122. For example, user profile 430 may include, but is not limited to, information regarding a device user's name, gender, age, religion, hobbies, interests, occupation, marital status, residence, income, Internet browsing history, geographic location, and credit-card transaction records. Similarly, device profile 434 may include, but is not limited to, a device type, a device manufacturer, supported device functionalities, a device location, and a device configuration.

In the FIG. 4 embodiment, docking port 438 may Include any appropriate type of interface means to facilitate bi-directional communications between one or more transport structures 210 (FIG. 2) and a user device 122. In the FIG. 4 embodiment, advertisements (ads) 442 may include targeted advertising information that has been received via distribution system 110 (FIG. 1A) specifically for a device user of user device 122. Similarly, content 446 may include targeted electronic content information that has been received via distribution system 110 (FIG. 1A) specifically for a device user of user device 122.

In the FIG. 4 embodiment, a user device 122 may utilize communication module 450 to perform bi-directional electronic communication procedures with any appropriate remote entity. Communication module 450 may utilize any effective communication techniques. For example, in certain embodiments, communication module 450 may perform short-distance communications in a merchandise store or other sales environment by utilizing short-range wireless techniques that are similar to known or enhanced Bluetooth® technologies. In other embodiments, communication module 450 may perform long-distance communications in a home or office environment by utilizing long-range wireless techniques that are similar to known or enhanced WiFi technologies.

In the FIG. 4 embodiment, miscellaneous information 454 may include any appropriate additional information or data for utilization by user device 122. For example, in certain embodiments, miscellaneous information 454 may include various types of metadata relating to other entities in distribution system 110 that was downloaded from one or more transport structures 210. Further details regarding the implementation and utilization of the FIG. 4 user memory 318 are discussed below in conjunction with FIGS. 5-8B.

Referring now to FIG. 5, a block diagram for one embodiment of the FIG. 1A information service 118 is shown, in accordance with the present invention. In the FIG. 5 embodiment, information service 118 includes, but is not limited to, a controller 514, a transport server 518, an ad server 538, one or more ad sources 540, one or more content sources 542, and a bid server 546. The FIG. 5 embodiment is presented for purposes of illustration, and in alternate embodiments, information service 118 may be implemented using components and configurations in addition to, or instead of, certain of those components and configurations discussed in conjunction with the FIG. 5 embodiment.

In the FIG. 5 embodiment, controller 514 may he implemented to include any effective control means for coordinating and monitoring operating functionalities of information service 118. For example, In certain embodiments, controller 514 may be implemented as a computer device with a corresponding control application program that manages the operation of information service 118. Alternately, controller 514 may be implemented as a central processing unit that includes any appropriate and compatible microprocessor device for executing software instructions to thereby control and manage the operation of information service 118.

In the FIG. 5 embodiment, transport server 518 may include any effective means for communicating with and controlling one or more transport structures 210 (FIG. 2), in accordance with the present invention. Additional details regarding the implementation and utilization of transport server 518 are further discussed below in conjunction with FIGS. 6A-6B. In the FIG. 5 embodiment, ad source(s) 540 may include one or more appropriate entities for providing advertisement information for dissemination through distribution system 110 (FIG. 1A). For example, ad sources 540 may include various commercial enterprises, specific advertisers, or advertising developers.

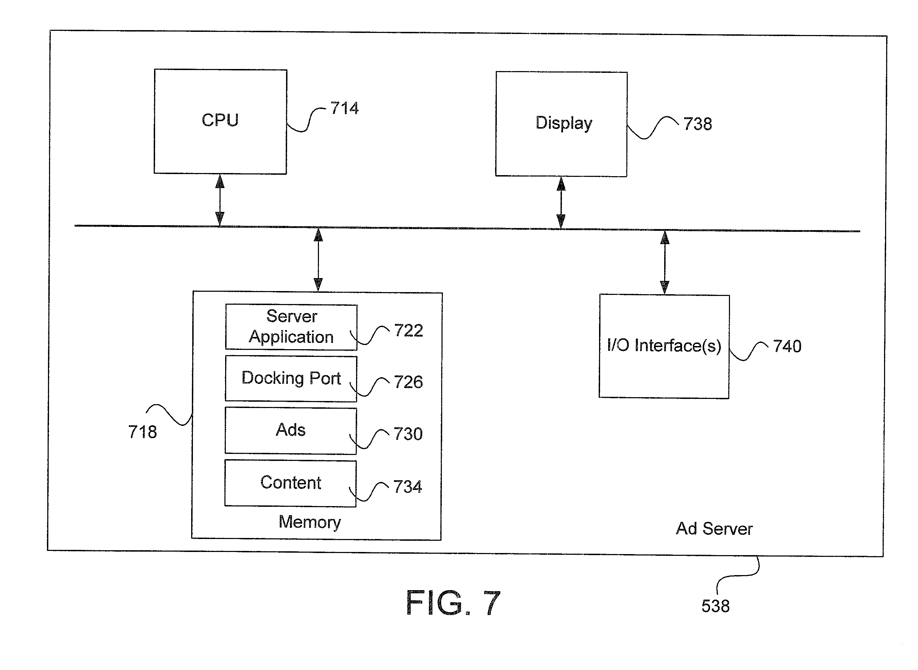

In the FIG. 5 embodiment, content source(s) 542 may include one or more appropriate entities for providing electronic content for dissemination through distribution system 110. For example, content sources 542 may include various commercial enterprises, specific advertisers, or content producers. In the FIG. 5 embodiment, ad server 538 may include any effective means for identifying and aggregating appropriate advertising information and/or electronic content for providing to targeted device users of user devices 122 (FIG. 1A) by utilizing metadata from one or more transport structures 210 (FIG. 2A). One embodiment of ad server 538 is further discussed below in conjunction with FIG. 7.

In the FIG. 5 embodiment, bid server 546 may include any effective means for supporting a consumer aggregation procedure that creates one or more consumer groups 150 (FIG. 1B), and then allows advertisers or other appropriate entities to bid or otherwise make offers to acquire advertising rights for said consumer groups 150. One embodiment of bid server 546 is further discussed below in conjunction with FIGS. 8A-8B. Additional details for the implementation and utilization of information service 118 are further discussed below in conjunction with FIGS. 6A-8B.

Referring now to FIG. 6A, a block diagram for one embodiment of the transport server 518 of FIG. 5 is shown, in accordance with the present invention. In the FIG. 6A embodiment, transport server 518 includes, but is not limited to, a central processing unit (CPU) 614, a memory 618, a display 638, and one or more input/output interface(s) (I/O interface(s)) 640. The FIG. 6A embodiment is presented for purposes of illustration, and in alternate embodiments, transport servers 518 may be implemented using components and configurations in addition to, or instead of, certain of those components and configurations discussed in conjunction with the FIG. 6A embodiment.

In the FIG. 6A embodiment, CPU 614 may be implemented to include any appropriate and compatible microprocessor device that preferably executes software instructions to thereby control and manage the operation of transport server 518. The FIG. 6A display 638 may include any effective type of display technology including a cathode-ray-tube monitor or a liquid-crystal display device with an appropriate screen for displaying various information to a device user. In the FIG. 6A embodiment, I/O interface(s) 640 may include one or more input and/or output interfaces to receive and/or transmit any required types of information by user device 122. In the FIG. 6A embodiment, transport server memory 618 may be implemented to include any combination of desired storage devices, including, but not limited to, read-only memory (ROM), random-access memory (RAM), and various types of non-volatile memory, such as floppy disks, memory sticks, compact disks, or hard disks.

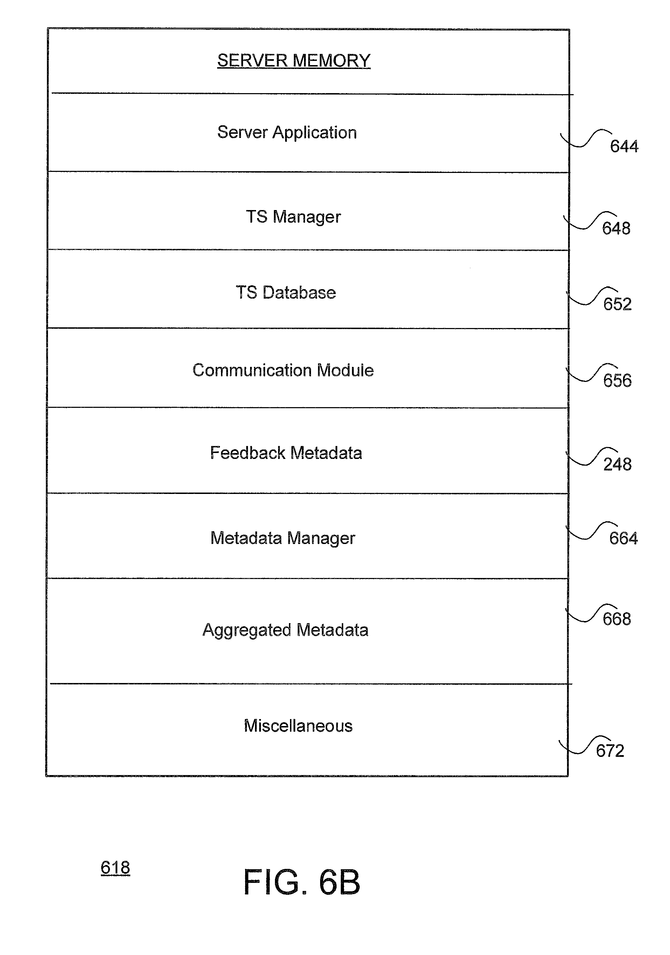

Referring now to FIG. 6B, a block diagram for one embodiment of the FIG. 6A transport server memory 618 is shown, in accordance with the present invention. In alternate embodiments, transport server memories 618 may be implemented by utilizing components and configurations in addition to, or instead of, certain of those components and configurations discussed in conjunction with the FIG. 6B embodiment.

In the FIG. 6B embodiment, transport server memory 618 may include, but is not limited to, a number of software programs and data that are disclosed below. For example, transport server memory 618 may include a transport server application 644 of program instructions that are preferably executed by CPU 614 to perform various functions and operations for transport server 518. The particular nature and functionality of server application typically varies depending upon factors such as the specific type and particular functionality of the corresponding transport server 518.

The transport server 518 may utilize a TS manager 648 to manage and coordinate various functions for one or more transport structures 210 (FIG. 2A), in accordance with the present invention. In certain embodiments, the TS manager 648 may include a registration module for coordinating registration procedures to register device users of user devices 122 for participating in various authorized distribution services from distribution system 110 (FIG. 1A). A TS database 652 may include any appropriate information regarding the transport structures 210 that provide distribution services to various entities in distribution system 10.

In certain embodiments, the TS manager 648 may continually update respective transport structure information in the TS database 652 to reflect the current status of transport structures 210 in distribution system 110. The transport server 518 may utilize a communication module 656 to perform bi-directional electronic communication procedures with any appropriate remote entity. For example, the communication module 656 may be utilized to remotely communicate with transport structures 210 in distribution system 110. Feedback metadata 248 may include any relevant information received from device users of respective user devices 122.

In the FIG. 6B embodiment, a metadata manager 664 or other appropriate entity may perform a metadata analysis/aggregation procedure upon metadata from transport structures 210 by utilizing any effective techniques. In certain embodiments, the metadata analysis/aggregation procedure identifies various types and categories of aggregated metadata 668 for use in creating consumer groups 150 (FIG. 1B). In certain embodiments, metadata manager 664 may analyze the metadata gathered from user devices 122 and corresponding device users in light of certain predefined criteria to identify specific targeting characteristics and parameters in aggregated metadata 668. For example, targeting characteristics may include, but are not limited to, selected characteristics from user metadata 222, device metadata 226, network metadata 230, and advertiser metadata 234 (see FIG. 2A). In the FIG. 6B embodiment, miscellaneous information 672 may include any desired type of information or data for utilization by transport server 518.

Referring now to FIG. 7, a block diagram for one embodiment of the ad server 538 of FIG. 5 is shown, in accordance with the present invention. In the FIG. 7 embodiment, ad server 538 includes, but is not limited to, a central processing unit (CPU) 714, a memory 718, a display 738, and one or more input/output interface(s) (I/O interface(s)) 740. The FIG. 7 embodiment is presented for purposes of illustration, and in alternate embodiments, ad server 538 may be implemented using components and configurations in addition to, or instead of, certain of those components and configurations discussed in conjunction with the FIG. 7 embodiment.

In the FIG. 7 embodiment, CPU 714 may be implemented to include any appropriate and compatible microprocessor device that preferably executes software instructions to thereby control and manage the operation of ad server 538. The FIG. 7 display 738 may include any effective type of display technology including a cathode-ray-tube monitor or a liquid-crystal display device with an appropriate screen for displaying various information to a device user. In the FIG. 7 embodiment, I/O interface(s) 740 may include one or more input and/or output interfaces to receive and/or transmit any required types of information by ad server 538.

In the FIG. 7 embodiment, memory 718 may be implemented to include any combination of desired storage devices, including, but not limited to, read-only memory (ROM), random-access memory (RAM), and various types of non-volatile memory, such as floppy disks, memory sticks, compact disks, or hard disks. In the FIG. 7 embodiment, memory 718 includes, but is not limited to, a server application 722, a docking port 726, ads 730, and content 734.

In the FIG. 7 embodiment, server application 722 may include program instructions that are preferably executed by CPU 714 to perform various functions and operations for ad server 538. The particular nature and functionality of server application 722 typically varies depending upon factors such as the specific type and particular functionality of the corresponding ad server 538. In certain embodiments, server application 722 may analyze metadata from transport structures 210 (FIG. 2A) to match appropriate media files 250 (FIG. 2B) with targeted consumer groups 150 comprised of device users of user devices 122 (FIG. 1B).

In the FIG. 7 embodiment, docking port 726 may include any effective interface means for ad server 538 to bi-directionally communicate with one or more transport structures 210 (FIG. 2) to transfer ads 730 and/or content 734. In the FIG. 7 embodiment, ads 730 include advertising information that is provided to ad server 538 from any appropriate entities, such as ad sources 540 (FIG. 5). Similarly, in the FIG. 7 embodiment, content 734 includes electronic content that is provided to ad server 538 from any appropriate entities, such as content sources 542 (FIG. 5).

In certain embodiments, ad server 538 or other appropriate entity may utilize a media match formula for evaluating and quantifying the potential effectiveness of advertising from a given advertiser to a given device user or consumer group 150. In the media match formula, an advertiser validation values may be calculated with certain match variables that include, one or more behavioral sculpting variables, one or more advertising medium variables, one or more product profile variables, and one or more advertiser connect variables.

Advertiser Validation is a number that is the result of utilizing the above relationship variables in the media match formula. The relationship between the user's perceptions about a product value using the user's profile beacons, the Behavioral Sculpture, divided by the product touch points defined in the Product Profile, then equals the user/product fit. The user product fit is then multiplied by taking the strength and reach of the advertiser's established use of media platforms and dividing that by the frequency and style of messaging that the advertiser has driven into the Advertiser Medium for the product, which then equals the advertiser foundation number. The multiplication of the user product fit with the advertiser foundation then equals the Advertiser Validation number, which represents a pricing constant that can be used in rate carding the users, the advertisers, and the product.

Table I: Advertising Validation (Good Will):
- Sales increases tied to messaging.
- Volume trends when cutting back on messaging.
- Consumer Choice between similar products as a percentage of industry sales (rating versus share).
- Advertising effect on consumer product recall.
- Advertising driving generic buys based upon cost versus brand-the spill over effect.
- The amount of complaints versus buyers acceptance, or the number of returns and/or warranty claims.
- Consumer interest in collateral advertiser products, brand lift.
- Survey of consumers.

In certain embodiments, the media match formula may be mathematically expressed in a concise manner by the following equation:

$$\frac{\text{Behavioral Sculpture}}{\text{Product Profile}} \times \frac{\text{Advertising Medium}}{\text{Advertiser Connect}} = \text{Advertiser Validation}$$

In certain embodiments, Behavioral Sculpture is the sifting of an individual's behavioral beacons through a grate of questions that is designed to identify key characteristics that can be associated with life style choices and consumer values (beacons). These questions will dynamically change based upon the respondents sequence of answers which will then constantly refine the subsequent questions to continually narrow the focus of respondents answers for each beacon. The result will be a clear identification of the desired consumption perspectives and values held by the respondent.

In certain embodiments, Product Profile identifies the product touch points that relate to the Behavioral Sculpture beacons (product touch points). It identifies how socially significant the identified product is. It calls out the utility and public or private usage perspective of the product. It defines the product in terms of the generally held public values related to each product. The Product Profile is set and maintained by the Network Operator to provide a constant product touch point value.

In certain embodiments, Advertising Medium outlines the type of advertising media that has populated the product message to the consumer. It identifies by advertising medium categories of messaging and the reach values that are already established with the product and the consumer. In certain embodiments, Advertising Connect defines the prior messaging experience between the advertiser and the consumer. It identifies frequency of messaging, style of messaging, and the existing strategy for communicating the message to the consumer.

With further regard to Behavioral Sculpting, the purpose is to push out advertising messages for viewing only to recipients where the advertising is relevant and of interest, and at the same time, reduce the advertising traffic that is irrelevant to other recipients. This requires intuitive distribution mapping based upon behavioral beacons from the recipient ("Behavioral Sculpting"). The recipient/device user provides the initial profile to a sponsor agency that is willing to take the time to work with the consumer (the "Client"). A better lifestyle opportunity, extended warranties and/or product discounts may also provide the consideration. These profiles are updated and refreshed based upon transactional access to the Client's behavior (constantly updating consumer meta data diaries) every quarter.

The Behavioral Sculptures may be layered to include not only the client but, when appropriate, the nuclear family members affected by the messaging opportunity ("Family Lacing"). Along with the Agency/Client dialogue, the Behavioral Sculptures also will track credit card purchases, movie ticket purchases, entertainment program choices, viewed publications, and website searches/surfing habits. The level of lifestyle audit will be up to the Client based on upon value received.

While this may sound like an invasion of privacy, these tracking activities already take place, but without the consumer's overview or advise. Consumers don't have the ability to edit the results. Here, not only will there be Client review, but also the right to approve the resulting profile. Today, social networks such as MySpace and Face Book, credit cards, and retail membership cards are all providing consumers' prosumer profiles without any impressions from the actual profile subjects. A prosumer may be described as a consumer that is proactively searching for a specific product or service that the prosumer wants to immediately obtain.

Behavioral Sculpting provides the Client with a profile they approve and updates the profile based upon the actual Client's consumer activities. Furthermore, the Client owns the Behavioral Sculpture which is licensed for exclusive or non-exclusive use by the originating advertising agency or agency association for specific periods of time. The Client can also license these Behavioral Sculptures to programming service providers to continually generate updated viewing logs for the Client's DVR.

In actual implementations, all these variables of the media match formula have defined units within each category, and the units have numerically weighted values that are added up within each category and the applicable sum is plugged into the media match formula for the resulting overall pricing value/advertiser validation. The following Tables II-IV are examples of such variables with given numerical values (0 to 100) that will change based upon the advertiser messaging impact on the consumer as reflected by the Client's Behavioral Sculpture.

Table II: Advertising Medium:

• Commercial Spots are self contained unique messages independent of the content surrounding them creating unique impressions. (50)

• Sponsorship banners attached to third party content that enhances Brand awareness and loyalty, but blends in with the content being sponsored. (35)

• Product integration creates random familiarity with the product, but with no sales messaging or brand statement. (15)

• Program sponsorship creates enhanced brand loyalty by creating a co-branding relationship to the content itself. (75)

• Program Ownership creates a institutional tie-in for the advertiser to both the content viewer and the product consumer. (100)

• Institutional Advertising on stadiums and other social icons creates institutional tie-ins creating society valued associations. (35)

• Static advertising messaging on billboards, magazines, and coupons reinforce more dynamic messaging in other mediums. (25)

• Public dynamic messaging with digital signage in retail, highway, and IP creates additional geographic messaging clusters. (25)

• Generic advertising in the form of trade associations and group distributor messaging. (35)

• Personal advertising in the form of emails, bills, and mailers. (25)

Table III: Product Profiles:

• Product fit in behavioral sculpture. (50)

• Personal use hidden from public view. (15)

• Personal use to form social statement. (100)

• Daily use in home, office, and/or in public. (15)

• Usage is integrated with consumer behavior. (75)

• Usage is disruptive to the user. (15)

• Bigger than life. (100)

• Part of life. (50)

• Incidental to life. (15)

• Politically correct. (75)

• Conflicted (e.g., green versus energy waste). (15)

• Similar generic products (15)

• Unique or exclusive. (100)

• New to market. (15)

• Old standard staple. (75)

• Ethnic. (35)

• Mainstream. (75)

• Keeper. (75)

• Disposable. (15)

Table IV: Advertiser Connect:

- Granular message. (100)
- Massive message. (15)
- One product message. (75)
- Multiple products. (35)
- Same spokesperson. (75)
- Different spokesperson. (25)
- Large number of messages over what period of time. (75)
- Large number of media windows and platforms. (75)
- One message (100)
- Serial of messages. (75)
- Authority message. (75)
- Friendly message. (35)
- Feel good. (75)
- Trust. (100)
- Believe in. (50)

Referring now to FIG. 8A, a block diagram for one embodiment of the bid server 546 of FIG. 5 is shown, in accordance with the present invention. In the FIG. 8A embodiment, bid server 546 includes, but is not limited to, a central processing unit (CPU) 814, a bid server memory 818, a display 838, and one or more input/output interface(s) (I/O interface(s)) 840. The FIG. 8A embodiment is presented for purposes of illustration, and in alternate embodiments, bid server 546 may be implemented using components and configurations in addition to, or instead of, certain of those components and configurations discussed in conjunction with the FIG. 8A embodiment.

In the FIG. 8A embodiment, CPU 814 may be implemented to include any appropriate and compatible microprocessor device that preferably executes software instructions to thereby control and manage the operation of bid server 546. The FIG. 8A display 838 may include any effective type of display technology including a cathode-ray-tube monitor or a liquid-crystal display device with an appropriate screen for displaying various information to a device user. In the FIG. 8A embodiment, I/O interface(s) 840 may include one or more input and/or output interfaces to receive and/or transmit any required types of information by bid server 546. In the FIG. 8A embodiment, bid server memory 818 may be implemented to include any combination of desired storage devices, including, but not limited to, read-only memory (ROM), random-access memory (RAM), and various types of non-volatile memory, such as floppy disks, memory sticks, compact disks, or hard disks.

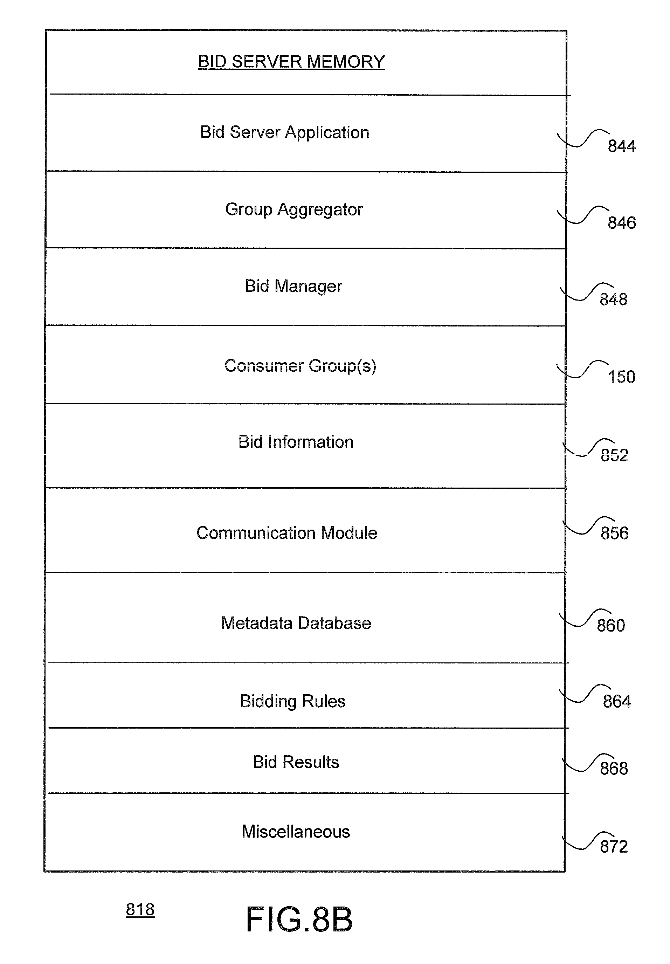

Referring now to FIG. 8B, a block diagram for one embodiment of the FIG. 8A bid server memory 818 is shown, in accordance with the present invention. In alternate embodiments, marketplace memories 818 may he implemented by utilizing components and configurations in addition to, or instead of, certain of those components and configurations discussed in conjunction with the FIG. 8B embodiment.

In the FIG. 8B embodiment, bid server memory 818 may include, but is not limited to, a number of software programs and data that are disclosed below. For example, bid server memory 818 may include a bid server application 844 of program instructions that are preferably executed by CPU 814 to perform various functions and operations for bid server 546. The particular nature and functionality of bid server application 844 typically varies depending upon factors such as the specific type and particular functionality of the corresponding bid server 546. In certain embodiments, the bid server 546 may utilize a communication module 856 to perform bi-directional electronic communication procedures with any appropriate remote entity. In the FIG. 6B embodiment, miscellaneous information 872 may include any desired type of information or data for utilization by bid server 546.

In the FIG. 8B embodiment, a group aggregator 846 may analyze information from a metadata database 860 or other data source(s) to identify one or more consumer groups 150, as discussed above in conjunction with FIG. 1B. Consumer groups 150 may be defined in any appropriate manner, including manual definition by one or more device users or other entities, or by performing an automatic group creation procedure with group aggregator 846. In certain embodiments, group aggregator 846 may continually analyze various types of metadata (such as aggregated metadata 668 of FIG. 6B) to recognize group patterns for device users and their corresponding user devices 122.

In the FIG. 8B embodiment, group aggregator 846 may keep a running tally of various predefined grouping factors to create corresponding consumer groups 150. In certain embodiments, consumer groups 150 may be populated by calculated weighted sums of the grouping factors for various device users. The grouping factors may include, but are not limited to, user metadata 222, device metadata 226, user preferences, user behavior patterns, geographic location information, Internet browsing patterns, and user purchasing behavior.

The group aggregator 846 may also identify appropriate target advertisers or advertisements by using any effective techniques. For example, group aggregator 846 may analyze various predefined targeting factors to identify target advertisers. The targeting factors may include, but are not limited to, advertising goals, product characteristics, product pricing information, and advertisement characteristics. The group aggregator 846 may then compare the characteristics of the consumer groups 150 to the target advertisers and advertisements, and offer the appropriate target advertisers an opportunity to make bids for sending advertisements to the respective consumer groups 150.

In the FIG. 8B embodiment, a bid manager 848 may coordinate a bidding procedure during which advertisers or other appropriate entities may bid or otherwise make offers to acquire access to one or more consumer groups 150. In the FIG. 8B embodiment, bid manager 848 may analyze bid information 852 in light of specific predefined bidding rules 864 to determine one or more bidding winners. In certain embodiments, the advertising value of a consumer group 150 is proportional to the number of device users represented. In the FIG. 8B embodiment, the results of the bidding procedure may be stored as bid results 868.

The bidding winners may then be notified and allowed to provide advertising information for transmission to the consumer group(s) 150 by information service 118 (FIG. 1). The various device users may then individually decide whether to participate in the bulk purchase opportunity that is being offered to the consumer group(s) 150. For at least the foregoing reasons, the present invention therefore provides an improved system and method for supporting a consumer aggregation procedure in an electronic network.

The invention has been explained above with reference to certain embodiments. Other embodiments will be apparent to those skilled in the art in light of this disclosure. For example, the present invention may readily be implemented using certain configurations and techniques other than those described in the specific embodiments above. Additionally, the present invention may effectively be used in conjunction with systems other than those described above. Therefore, these and other variations upon the discussed embodiments are intended to be covered by the present invention, which is limited only by the appended claims.

In so far as the embodiments of the invention described above are implemented, at least in part, using software-controlled data processing apparatus, it will be appreciated that a computer program providing such software control and a transmission, storage or other medium by which such a computer program is provided are envisaged as aspects of the present invention.

Other features/embodiments of the invention can be provided as set out in the following paragraphs

1. A system for implementing an information distribution network, comprising:

an information service that is configured to provide information distribution services through said information distribution network;
user devices that device users utilize to communicate with said information service for receiving said information distribution services;
a group aggregator that analyzes metadata to define at least one consumer group from among said devices users; and
a bid manager that advertisers communicate with to participate in a bidding procedure for obtaining advertising rights to provide selected information to said consumer group, wherein said group aggregator analyzes grouping factors from said metadata to create said consumer group.

2. A system according to paragraph 1, wherein said grouping factors include user metadata, device metadata, user preferences, user behavior patterns, geographic location information, Internet browsing patterns, and user purchasing behavior.

3. A system according to paragraph 1, wherein said group aggregator identifies target advertisers for said consumer group by analyzing targeting factors.

4. A system according to paragraph 3, wherein said targeting factors include advertising goals, product characteristics, product pricing information, and advertisement characteristics.

5. A system according to paragraph 3, wherein said group aggregator compares group characteristics of said consumer groups to advertiser characteristics of said advertisers to specifically identify said target advertisers.

6. A system according to paragraph 5, wherein said group aggregator offers said target advertisers bidding opportunities to place bids for sending advertisements to said consumer group.

7. A system according to paragraph 6, wherein said bid manager analyzes bid information from said target advertisers in light of predefined bidding rules to determine one or more bidding winners.

8. A system according to paragraph 7, wherein said bid manager notifies one or more bidding winners, said bidding winners providing said advertisements for transmission to said consumer group.

9. A system for implementing an information distribution network, comprising:

an information service that is configured to provide information distribution services through said information distribution network;
user devices that device users utilize to communicate with said information service for receiving said information distribution services;
a group aggregator that analyzes metadata to define at least one consumer group from among said devices users; and

a bid manager that advertisers communicate with to participate in a bidding procedure for obtaining advertising rights to provide selected information to said consumer group, wherein said consumer group increases in value to said advertisers as a total consumer count in said consumer group increases.

10. A system according to paragraph 2, wherein said user metadata includes a personal name, gender, age, religion, hobbies, interests, occupation, marital status, residence, income, Internet browsing history, and credit-card transaction records of said device users.

11. A user device comprising:

a data module that manages metadata that is related to said user device and to a device user of said user device;
a transport structure that provides said metadata to an information service for identifying at least one consumer group that includes said user device; and
a communication module that transmits said transport structure to said information service, said metadata being utilized by said information service to select one or more targeted advertisements.

12. A user device according to paragraph 11, wherein said consumer group is identified by a group aggregator that analyzes grouping factors from said metadata.

13. A user device according to paragraph 12, wherein said grouping factors include user metadata, device metadata, user preferences, user behavior patterns, geographic location information, Internet browsing patterns, and user purchasing behavior.

14. A user device according to paragraph 12, wherein said group aggregator identifies target advertisers for said consumer group by analyzing targeting factors and said bid information from said target advertisers is analyzed by a bid manager in light of predefined bidding rules to determine one or more bidding winners and said bid manager notifies said one or more bidding winners, said bidding winners providing said targeted advertisements for transmission to said user device.

## Claims

1. A system for implementing an information distribution network, comprising:

an information service that is configured to provide information distribution services through said information distribution network;
user devices that device users utilize to communicate with said information service for receiving said information distribution services;
a group aggregator that analyzes metadata to define at least one consumer group from among said devices users; and
a bid manager that advertisers communicate with to participate in a bidding procedure for obtaining advertising rights to provide selected information to said consumer group.

2. The system of claim 1 further comprising a transport structure that communicates with network entities in said information distribution network, said transport structure collecting said metadata for providing said selected information from said information service to said consumer group.

3. The system of claim 1 wherein said group aggregator and said bid manager are implemented in a bid server from said information distribution network.

4. The system of claim 1 wherein said group aggregator analyzes said metadata to recognize group patterns from said device users and corresponding ones of said user devices.

5. The system of claim 1 wherein said group aggregator analyzes grouping factors from said metadata to create said consumer group.

6. The system of claim 5 wherein said group aggregator populates said consumer group by calculated weighted sums of said grouping factors for respective ones of said device users.

7. The system of claim 5 wherein said group aggregator identifies target advertisers for said consumer group by analyzing targeting factors.

8. The system of claim 7 wherein said group aggregator compares group characteristics of said consumer groups to advertiser characteristics of said advertisers to specifically identify said target advertisers.

9. The system of claim 7 wherein said device users in said consumer group individually decide whether to participate in a bulk purchase opportunity that is offered to said consumer group.

10. A user device comprising:

a data module that manages metadata that is related to said user device and to a device user of said user device;
a transport structure that provides said metadata to an information service for identifying at least one consumer group that includes said user device; and
a communication module that transmits said transport structure to said information service, said metadata being utilized by said information service to select one or more targeted advertisements.

11. The user device of claim 10 wherein said device user individually decides whether to participate in a bulk purchase opportunity that is offered to said consumer group, said device user utilizing said communication module to inform said information service of a corresponding purchasing decision.

12. The user device of claim 10 wherein said communication module receives said one or more targeted advertisements from said information service, said one or more advertisements being targeted at said consumer group by utilizing said metadata.

13. The user device of claim 10 wherein said consumer group is identified by a group aggregator that analyzes grouping factors from said metadata.

14. The user device of claim 13 wherein said group aggregator identifies target advertisers for said consumer group by analyzing targeting factors.

15. The user device of claim 14 wherein bid information from said target advertisers is analyzed by a bid manager in light of predefined bidding rules to determine one or more bidding winners.

110   FIG. 1A

User
Device A

122(a)

User
Device B

122(b)

• • •

User
Device M

122(m)

Consumer Group

150

FIG. 1B

TRANSPORT STRUCTURE

| | |
|---|---|
| User Metadata | 222 |
| Device Metadata | 226 |
| Network Metadata | 230 |
| Advertiser Metadata | 234 |
| Consumer Group Metadata | 238 |
| Miscellaneous | 242 |
| Media Link | 246 |
| Feedback Metadata | 248 |

210      FIG. 2A

---

**MEDIA FILE**

Advertisement(s) ~254

Content Item(s) ~258

250

# FIG. 2B

FIG. 3

| | |
|---|---|
| **USER MEMORY** | |
| Device Application | 422 |
| Data Module | 426 |
| User Profile | 430 |
| Device Profile | 434 |
| Docking Port | 438 |
| Advertisments (Ads) | 442 |
| Content | 446 |
| Comunication Module | 450 |
| Miscellaneous | 454 |

318                 FIG. 4

Controller 514

Ad Server 538

Bid Server 546

Transport Server 518

Ad Source(s) 540

Content Source(s) 542

Information Service 118

FIG. 5

EP 2 315 174 A1

CPU —614

Display —638

Transport Server Memory

618

I/O Interface(s) —640

Transport Server

FIG. 6A

518

SERVER MEMORY

Server Application — 644

TS Manager — 648

TS Database — 652

Communication Module — 656

Feedback Metadata — 248

Metadata Manager — 664

Aggregated Metadata — 668

Miscellaneous — 672

618

FIG. 6B

FIG. 7

EP 2 315 174 A1

CPU ⟋ 814

Display ⟋ 838

Bid Server Memory

818

I/O Interface(s) ⟋ 840

Bid Server

**FIG. 8A**

546

### BID SERVER MEMORY

Bid Server Application  ~844

Group Aggregator  ~846

Bid Manager  ~848

Consumer Group(s)  ~150

Bid Information  ~852

Communication Module  ~856

Metadata Database  ~860

Bidding Rules  ~864

Bid Results  ~868

Miscellaneous  ~872

818

# FIG.8B

**EP 2 315 174 A1**

Europäisches
Patentamt

European
Patent Office

Office européen
des brevets

# EUROPEAN SEARCH REPORT

**Application Number**

EP 10 17 2692

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | "STATEMENT IN ACCORDANCE WITH THE NOTICE FROM THE EUROPEAN PATENT OFFICE DATED 1 OCTOBER 2007 CONCERNING BUSINESS METHODS - EPC / ERKLAERUNG GEMAESS DER MITTEILUNG DES EUROPAEISCHEN PATENTAMTS VOM 1.OKTOBER 2007 UEBER GESCHAEFTSMETHODEN - EPU / DECLARATION CONFORMEMENT AU COMMUNIQUE DE L'OFFICE EUROP", 20071101, 1 November 2007 (2007-11-01), XP002456252, | 1-15 | INV. G06Q30/00 |
| L | * The technical aspects identified in the present application (Art. 92 EPC) are considered part of common general knowledge. Due to their notoriety no documentary evidence is found to be required. For further details see the accompanying Opinion and the reference below.; the whole document * | | |
| | ----- | | |

|  | TECHNICAL FIELDS SEARCHED (IPC) |
|---|---|
| | G06Q |

The present search report has been drawn up for all claims

| Place of search | Date of completion of the search | Examiner |
|---|---|---|
| Munich | 2 February 2011 | Anastasov, Yuliyan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

....................................................................................

& : member of the same patent family, corresponding document

EPO FORM 1503 03.82 (P04C01)